# EUROPEAN PATENT APPLICATION

(11) **EP 3 002 713 A1**
(43) Date of publication of application: **06.04.2016**
(21) Application number: 15154509.2
(22) Date of filing: 10.02.2015
(51) Int. Cl.: G06K 19/067, G06K 7/08

(54) **Capacitive information carrier pattern integrated into print product artwork**

(30) Priority: 02.10.2014 EP 14187505
(71) Applicant: T-Touch International S.à r.l., 1857 Luxembourg (LU)
(72) Inventor: Weigelt, Karin, 09112 Chemnitz (DE); Thiele, Jan, 09224 Chemnitz/Grüna (DE); Voigt, Sascha, 09337 Bernsdorf (DE); Funke, Stefanie, 09117 Chemnitz (DE)
(74) Representative: Hertin und Partner Rechts- und Patentanwälte PartG mbB

(57) **Abstract**

The invention relates to a method for the manufacture of a planar, capacitive information carrier comprising a graphic artwork and electrically conductive areas forming a code layout wherein the graphic artwork and code layout coincide. The coincidence of the graphic artwork and code layout makes it difficult for a user of the information carrier to differentiate between the aesthetic and functional parts of the information carrier. The information carrier may also comprise inactive electrically conductive elements for further distracting the attention of said user from the functional code layout. In another aspect, the invention relates to information carrier and a method for reading out an information carrier.

## Description

The present invention relates to a method for the manufacture of a planar, capacitive information carrier comprising a graphic artwork and electrically conductive areas. The invention also relates to a method for reading out an information carrier by a touch screen and in a further aspect to a planar, capacitive information carrier.

### Background of the invention:

During the last years, there has been a rapid development for technologies capable of storing information which additionally interact with touch screens. A touch screen is in particular a physical interface for sensing electrical capacitances or capacitance differences within sub-areas of a defined area. These touch screens are common in (but not limited to) smart phones, mobile phones, displays, tablet-PCs, tablet notebooks, graphic tablets, television devices, trackpads, touchpads, input devices, PDAs, and/or MP3 devices. Technologies to perform this detection include resistive, capacitive, acoustic and optical technologies. All these technologies are optimized to detect a human finger or a specially designed stylus that is brought into contact with a touch screen. The term "touch screen" is used synonymously for any touch screen bearing device in the context of this application.

The prior art shows several ways of producing, with the aid of printing techniques or other coating processes, information carriers that can be read by smart devices. A commonly used approach is to apply a bar code or a QR code on any kind of object. These codes can be sensed by suitable optic scanners or cameras which are often part of the devices including a touch screen. Although easy and economically to produce, bar codes have some disadvantageous, e.g. the fact that it is easy to generate a counterfeit by just copying the visible code. Thus, they are less safe than more sophisticated information storing technologies. Furthermore, it may not be desirable for certain applications that the bar code covers a certain area of the object where the code is applied to and that it is visible to a user.

In WO 2011/154524 A1, a system for the transfer of information is disclosed. This system comprises a capacitive information carrier and a surface sensor by the virtue of which the above-mentioned disadvantageous of the prior art are overcome. The basic idea of the system is to use an information carrier comprising a pattern of electrically conductive regions placed on a non-conductive substrate by printing. This pattern is referred to as a touch structure. As the touch screen technology is optimized to detect a human finger or a specially designed stylus that is brought into contact with a touch screen, this touch structure aims at imitating the properties and the arrangement of fingertips.

Furthermore, the invention comprises a process for acquiring information, comprising a capacitive information carrier, a capacitive surface sensor, a contact between the two elements, and an interaction which makes a touch structure of the information carrier evaluable for a data-processing system connected to the surface sensor and can trigger events that are associated with the information carrier. According to WO 2011/154524 A1, the information carrier has at least one electrically conductive layer arranged on an electrically non-conductive substrate.

An interaction between the information carrier and the capacitive surface sensor is achieved by bringing into contact the capacitive surface sensor and the information carrier. It is preferred that the contact is a static and/or dynamic contact. In the context of WO 2011/154524 A1, an information carrier is in particular a medium for the storage, replication, deposition and/or assignment of information.
The capacitive information carrier of the WO 2011/154524 A1 comprises at least one electrically conductive layer, which is arranged as a touch structure on an electrically non-conductive substrate. The touch structure comprises of at least one coupling surface which is connected to at least one touch point via at least one conductive trace.

The combination of at least one or more touch points in a touch structure replicates the arrangement or properties of fingertips, wherein the property of the touch structure is described to the effect that said touch structure can execute an input on a surface sensor just like one or multiple fingers. Such a structure can be evaluated by a data-processing system connected to the surface sensor and processed by software technology. The system described in WO 2011/154524 A1 allows for reading out the information carrier by means of a surface sensor capacitively.

The relevant electrically conductive elements of an information carrier known from the prior art are the touch points, the coupling area and the conductive traces. One major cost factor for the production of conventional information carriers or packages is the overprinting of the conductive elements with opaque white ink. It is known to a person skilled in the art to produce information carriers comprising electrically conductive elements by using cold foil transfer methods or conductive inks. A standard production process for conventional information carriers may comprise the following steps:
The front side of a substrate is printed with a four-color-print (CMYK) and a matt varnish. This four-color-print represents the graphic design of the information carrier which is visible to a customer or a user of the information carrier. After applying the graphic design to the front side of the information carrier, the conductive ink or cold foil is applied on the back side of the substrate of the information carrier. When a cold foil transfer method is used to generate the electrically conductive layer, this is done by first applying a cold foil glue on the substrate and a cold metal foil afterwards. Additionally, a gray mask (15 - 20 % black) can be applied to the back side of the information carrier to reduce the contrast of the electrically conductive elements and the surrounding area. In terms of using conductive inks, the conductive elements will be applied directly on the substrate.

The third production step comprises a full-surface overprinting with opaque white ink. This opaque white ink which is applied to the back side of the substrate is overprinted by another four-color-printing and a matt varnish if the graphic design of the information carrier also comprises the design of the back side of the information carrier. The fifth and last step of the production process comprises optional postpress steps like die-cutting, sorting, flow-packing and packaging. The overprinting usually comprises two to four layers of opaque white ink which is usually applied using flexo, offset or screen printing.

As these overprinting layers with opaque white ink are responsible for about 75 % of the additional material costs caused by the integration of a capacitive information carrier into an existing print product, the object of the present invention is to provide a method for the manufacture of an information carrier where the costs especially for the overprinting are reduced compared to production methods known from the prior art. It is also an object of the present invention to overcome the disadvantageous and drawbacks of the information carriers known from the prior art.
The object is achieved by the independent claims. Advantageous embodiments result from the dependent claims.

### Summary of the invention

In a first aspect, the present invention relates to a method for the manufacture of a planar, capacitive information carrier having a front side and a back side showing a graphic artwork on either side of an electrically non-conductive substrate. The information carrier comprises electrically conductive areas which are connected to each other. The method for the manufacture of an information carrier according to the present invention comprises the following steps:
a) providing an electrically non-conductive substrate (2),
b) application of the electrically conductive areas (3, 4, 5) on the front side (10) or the back side (11) of the information carrier (1) whereby a carrier is created,
c) application of the graphic artwork (7) onto the carrier according to step b, wherein the graphic artwork (7) is formed by at least one at least partially applied color layer and/or at least partially applied varnish layer, wherein the graphic artwork (7) coincides with the electrically conductive areas (3, 4, 5).

The electrically conductive areas comprise sub-areas forming at least a first, second and third section. The first section of these sub-areas will be referred to as touch points in the sense of the present invention. Touch points represent the electrically conductive elements of the information carrier whose detection is desired. It is preferred that their detection triggers events on a touch screen. It has been shown that these touch points are capable of imitating the properties of fingertips surprisingly well. Thus, the information carrier according to the present invention can be used as an additional input means, next to a finger or a stylus.

The second section of the electrically conductive sub-area corresponds to a coupling area and the third section of the electrically conductive sub-areas represents the conductive traces. These conductive traces connect the sub-areas of the first sub-area and the second sub-area galvanically and/or electrically to each other.

The touch points of the information carrier are electrically linked by the conductive traces. It is preferred that all touch points are electrically linked with each other. It can also be preferred that the touch points form a chain and that only adjacent touch points are linked to each other. The purpose of the coupling area is to couple in a capacitance of a human user into the electrically conductive areas of the information carrier. This means that the electrical potential of the touch points is set onto the electrical potential of the human user.

The coupling area is an area of conductive material on the information carrier. It is electrically linked via conductive traces to one or more of the touch points so that the linked areas have the same electric potential as the coupling area. The coupling area is preferably easily accessible by a human user in order to set the potential of the coupling area onto the potential of a user. The coupling area need not be a closed area, but may comprise a grid of conductive lines or an array of electrically connected structures. Advantageously, the coupling area has arbitrary shape. It may also comprise non-conductive spots or parts.

The coupling area can for example be used in such a way that a human user places his finger on the coupling area. Thus, the electrically conductive areas which are electrically linked to this coupling area will have substantially the same electric potential as the finger of a user. This may be advantageous, since touch screens are commonly designed to work with a typical capacity of a human user. It was surprising that the coupling area does not necessarily need to be directly contacted by the user's finger, since the finger being in close proximity to the coupling area may sufficiently influence the electrical potential of the coupling area to achieve the desired effect. Thus, the information carrier according to the present invention can be used in a larger number of applications and is more versatile in use.

It is preferred that the electrically conductive areas combine both functional and aesthetical components. The components of the electrically conductive areas, i.e. the touch points, coupling area and conductive traces, are integrated into the aesthetical artwork. This can advantageously be achieved by applying a sophisticated, witty design to the touch points, adapting the conductive traces to the needs of the graphic artwork. As an example, this can advantageously be achieved by integrating curved conductive traces instead of straight traces which would represent the shortest and cheapest connection between two electrically conductive areas and/or applying a graphic pattern to the coupling area. The terms "graphic artwork", "graphic design" and "graphic pattern" will be used synonymously in the present application.

By this integration of the touch points, coupling area and conductive traces into the graphic artwork, it is possible to omit the overprinting of the electrically conductive areas by additional layers of color or opaque white ink to reduce production costs.

In former application of conventional information carriers, the overprinting was necessary in order to hide the electrically conductive areas. It was done when the apparent presence of the electrically conductive areas were not desired to be seen by a user of conventional information carriers or when the electrically conductive areas were to be hidden because of security reasons. If the user was not able to recognize the presence or the structure of the electrically conductive areas, it was more difficult to forge the conventional information carrier.

These disadvantages and drawbacks of the prior art are overcome with the integration of the electrically conductive areas into the graphic artwork. It is preferred that the user of the information carrier according to the present invention does see the electrically conductive areas, but that the user does not recognize the functional, but only the aesthetical aspect of the electrically conductive areas. As the user only recognizes the design of the electrically conductive areas, but not their function, which is encoding information that can be read by a touchscreen bearing device, it is less probable that the electrically conductive areas and/or the information carrier according to the present invention become the subject of forgery or abuse. Surprisingly, the information carrier according to the present invention does overcome the drawbacks and disadvantages described in the prior art, namely drawbacks and disadvantages connected to visible optic encoding technologies, such as bar codes or QR codes.

It is preferred that the electrically and the graphic artwork coincide in order to distract the attention of a user of the information carrier according to the present invention from the functional element of the electrically conductive areas, i.e. the touch points, conductive traces and the coupling area.

It also came as a surprise that it is no longer necessary to hide the electrically conductive areas from view by overprinting and still a very functional information carrier is obtained. This is due to the advantageous fact that the electrically conductive areas are visible, but are not recognized to by functional elements of an electrically conductive layer.

In a preferred embodiment, the invention relates to a method of manufacture comprising the following steps:
a) design of a graphic artwork for the front side and/or the back side of the information carrier,
b) design of a code layout for the front side or the back side of the information carrier comprising electrically conductive areas,
c) adaption of the graphic artwork to the code layout comprising the electrically conductive areas.

Advantageously the first step of the manufacturing method is the design of a rough graphical artwork for the capacitive information carrier. The design of the graphical artwork comprises the creation and placement of images, selection of fonts, arrangement of various graphical elements and the like.

It is preferred that the graphic artwork is designed in regard to the electrically conductive areas and their structure and appearance. Advantageously, graphic artworks can be applied on either side of the information carrier. In a further step of the manufacture method, a code layout is designed for the front side or the back side of the information carrier. It can also be preferred that method steps a) and b) are executed in reverse order. It is also preferred that the code layout is designed in regard to the graphic artwork.

The term "in regard to" in the context of this invention means that the designer bears in mind the fact that the graphic artwork and the code layout are supposed to coincide with each other. If e.g. the graphic artwork comprises flowers and blossoms, the touch points of the code layout may have the shape of flowers, blossoms or leaves. The conductive traces may advantageously be designed to look like tendrils or stalks and the coupling area may for example be formed like a flower box or a garden bed.

The second step of the manufacturing method preferably comprises the actual creation of the electrically conductive areas which are produced by an electrically conductive material. These electrically conductive areas combine functional and aesthetical features. On the one hand, the electrically conductive areas have to serve as functional elements of the information carrier, i.e. touch points, coupling area and conductive traces, and trigger events on a capacitive touch screen. On the other hand, they are designed aesthetically as they are visible on the end product.

It is preferred that, before starting the design work, the designer ought to have a rough idea about the principles of the graphic artwork and the code layout of the information carrier to be designed. In particular, this coincidence means that the graphic artwork is partially formed or replaced by portions of the electrically conductive areas. The term "code layout" stands for the entirety of the electrically conductive areas, i.e. the touch points, the coupling area and the conductive traces.

In a further embodiment of the invention, electrically conductive inactive elements are applied on the information carrier and configured to coincide with both the graphic design and the code layout. In the context of this invention, the term "inactive" means that the electrically conductive inactive elements are not connected by conductive traces to either the touch points or the coupling area. It is preferred that they represent standalone, separated electrically conductive elements that are not detected by a touch screen bearing device as they have no electrical potential to be detected, unless they are by chance touched by a human user.

Advantageously, the inactive elements have the same shape and appearance as the touch points. It came as a surprise that an information carrier can be provided having electrically conductive inactive elements that imitate the appearance of touch points, but differ significantly in their function and impact on a touch screen. Due to the optical similarity of the touch points and the inactive elements the code layout, e.g. the technically relevant parts of the information carrier, it is hard to tell for a user whether a certain element of the graphic artwork coinciding with both the inactive elements and the electrically conductive areas has a functional meaning for the readability of the information carrier or not. The same advantages can be achieved by integrating electrically conductive inactive elements imitating shape, size and layout of the conductive traces. Thus, the electrically conductive areas forming the code layout are even better hidden from view making it even harder for potential forgers to imitate the code layout.

Advantageously, the inactive elements can be integrated into the artwork to mislead the user from the function of the electrically conductive areas which form the code layout. This is achieved by the coincidence of the graphic artwork, the code layout and the inactive elements. The coincidence of these three elements makes it difficult for a user of the information carrier according to the present invention to differentiate between the aesthetic and functional components of the information carrier. This leads to a situation where the user does not recognize the functional meaning of the code layout. As the code layout is no longer recognized by a user, it will neither be forged nor imitated as it is not clear to a potential forger which components of the information carrier distribute to the detection by a touch screen or which components encode information. Advantageously, this effect is enhanced by the application of the inactive elements.

It is preferred that the inactive elements are small enough not to be detected by a touch screen. Advantageously, they are not connected to one of the electrically conductive areas forming the code layout.

It is preferred that the inactive elements are applied to the information carrier according to the present invention in the same way as the electrically conductive areas. It is also preferred that they are made of the same material. Advantageously, the inactive elements and the electrically conductive areas can be applied in one production step.

In a further embodiment the electrically conductive inactive elements can be applied on the both sides of the information carrier. Thus the user is misleading additionally on whether side of the information carrier functional elements may be.

In a further step of the manufacturing method, the graphic artwork and the electrically conductive areas are adapted to each other by means of fine tuning work, so that they perfectly coincide. If applied, the inactive elements are adapted to the graphic artwork and conductive areas as well. In a last step of the manufacturing method, the graphic pattern, the electrically conductive areas and if applied the inactive elements are arranged on the non-conductive substrate to create the capacitive information carrier. By this arrangement, coincidence of the graphic pattern on the one hand and the electrically conductive areas and if applied the inactive elements on the other hand is achieved whereby additional overprinting production steps can be avoided. This leads to reduced production costs both by saving opaque printing ink and reducing the number of production steps. Preferably, printing machines with limited amount of print units can be used as well to produce the whole capacitive information carrier. Such machines are widely spread into the market and therefore possess a large availability.

Advantageously, the graphic artwork and the code layout are adapted to each other in a next step of the manufacture method. This means that the graphic artwork and the code layout are partly integrated into each other or that parts of the code layout or the total code layout form the graphic artwork.

It is preferred that the method of manufacture includes the imposition of several blanks on one print sheet for printing multiple-ups. It is also preferred that every print sheet is separated after printing by cutting or die-cutting. Furthermore, it is preferred that the products for which the information carrier is used can be cards, flyers, labels or other flat printing products as well as packages. The average person skilled in the art knows in which further contexts the information carrier according to the present invention can be used.

It was totally surprising that a manufacture method can be provided where the design of a code layout corresponding to the electrically conductive elements of the electrically conductive layer and the design of a graphic artwork coincide with each other so that the functional meaning of the electrically conductive elements of the information carrier according to the present invention does not get clear to the user of said information carrier.

Advantageously, the significance of the electrically conductive elements of the information carrier for encoding information is not recognized by a user of the information carrier. It will not come to the mind of a user willing to abuse or forge the information carrier, to imitate or forge the combination of the graphic artwork and the code layout which encodes information as the potential forger does not realize that it is the code layout that encodes the information present on the information carrier according to the present invention. This is due to the advantageous fact that the code layout merges with the graphic design.

The application of the electrically conductive areas, i.e. the touch points, coupling area and conductive traces, is carried out in a way that the application of a gray mask and the overprinting process with opaque white ink will not be necessary. By omitting the overprinting with several layers of opaque white ink, the production costs for an information carrier according to the present invention making use of the manufacturing method are reduced with regard to the printing process. The main efforts will advantageously be in the prepress and in the design of the graphic artwork.

It is preferred that an electrically non-conductive substrate is provided as a basis for the manufacture of an information carrier according to the present invention. Advantageously, flat, flexible, non-conductive materials are used for the substrate, in particular paper, cardboard, plastic, wood-based material, composite, glass, ceramic, textile, leather or any combination thereof.

It is preferred that the electrically non-conductive substrate has a thickness of 20 to 2.000 µm, preferably 50 to 1.000 µm and most preferably 150 to 500 µm. In particular the latter range of thicknesses has shown to be easily processible with common printing machines, which leads to an effective an economic production process. In addition, these ranges of thicknesses allow for a good capacitive readability of the information carrier on touch screen devices.

It is preferred that the electrically conductive areas and the optional inactive elements are applied onto an electrically non-conductive substrate. By applying the electrically conductive areas and the optional inactive elements on the substrate of the information carrier, a carrier is obtained. This carrier represents an intermediate step in the production process of the information carrier.

It is preferred that a graphic pattern is applied on the carrier according to step b of the manufacturing method, wherein the graphic pattern is formed by at least one at least partially applied color layer and/or an at least partially applied varnish layer. Advantageously, the graphic pattern coincides with the electrically conductive areas and the optional applied inactive elements which were applied on the substrate of the information carrier before.

In the context of the present invention, the term "coincide" means that there is a relation between the graphic artwork which is printed with a four-color-print on the information carrier and the electrically conductive areas of the information carrier. The electrically conductive areas and if applied the inactive elements become part of the graphic artwork. It is preferred that all electrically conductive areas are overprinted by the four-color-printing representing the graphic artwork. It may also be preferred that not all electrically conductive areas are overprinted by the graphic artwork.

By the desired relation between the graphic artwork, the conductive areas and, if applied, the inactive elements, an overprint of the conductive areas with several layers of opaque white ink is no longer needed to hide the conductive areas. Hiding the electrically conductive areas from view may be preferred to make it more difficult for potential forgers to imitate the electrically conductive areas of the information carrier encoding the information. This increased difficulty is due to the fact that the electrically conductive areas are integrated into the graphic artwork. Thus, the electrically functional parts of the information carrier cannot easily be differentiated from the only aesthetic elements of the information carrier or the inactive elements. A potential forger will not know which parts of the information carrier have to be duplicated in order to provide an information carrier with the same code layout as the information carrier to be forged. By the advantageous integration of graphic artwork and functional parts of the information carrier, the counterfeit protection of the information carrier is enhanced.

It came as a surprise that the counterfeit protection of the information carrier according to the present invention can be increased by the integration of the graphic artwork and functional parts of the information carrier. In particular, it is not possible to forge the information carrier according to the present invention without destroying it.

As the color layer and the varnish layer are partially applied on the substrate of the information carrier, they can also be referred to as structured varnish or color layer. The expression "partially applied" and "structured" will be used synonymously in the context of the present application.

It may be preferred that the information carrier according to the present invention is connected to an object or that the object itself serves as a substrate. An object in the sense of the present invention is in particular a thing, an article or an entity. In another preferred embodiment of the present invention, the information carrier is connected to or serves as a part of a package. The attachment or application can be effected, for example, self-adhesively, or by means of other known joining technologies or auxiliaries. Furthermore, it is possible to print the electrically conductive areas and if applied the inactive elements as well as the color layer and/or the varnish layer directly on a packaging substrate.

It was totally surprising that a method for the creation and production of an information carrier can be provided by which the amount of printing material and the process costs can be reduced significantly. Furthermore, it was very surprising that the touch points can inconspicuously be integrated into the graphical artwork. Although the touch points are visible, their functionality is not obvious for the consumer or the user. Besides, it was totally surprising that electrically conductive elements can be designed which neither influence the functionality of touch points, nor cause touch events on a multi-touch screen device. Compared to information carriers known from the prior art, several additional layers of gray or black mask as well as all layers of opaque white ink can advantageously be omitted when using the method of manufacture according to the present invention.

In another preferred embodiment, the invention relates to a manufacturing method wherein the electrically conductive areas comprise sub-areas, forming at least a first, second and third section wherein the sub-areas of the third section connect the sub-areas of the first sub-areas and the second sub-area galvanically and/or electrically to each other. It is preferred that the first section of the sub-areas correspond to the touch points, the second section corresponds to the coupling area and the third section corresponds to the conductive traces. It was totally surprising that it was possible to manufacture the electrically conductive areas in one production step.

Furthermore, it is preferred that both the first section of the electrically conductive areas, i.e. the touch points, and the third section of the electrically conductive areas, i.e. the conductive traces, consist of at least one sub-area each. In the context of this invention, this means that the first section of the electrically conductive areas consists of at least two sub-areas, namely two touch points, and that the third section of the electrically conductive areas consists of at least two sub-areas, namely two conductive traces. It is preferred that the touch points are connected to each other by the conductive traces, but that they have a minimal distance to the other touch points, inactive elements and the coupling area. Advantageously, the touch points do not touch or have physical contact to the other touch points, inactive elements and the coupling area.

It is preferred that the conductive traces connect the touch point to each other and/ or to the coupling area. It may also be preferred that two or more conductive traces intersect for some applications.

In another preferred embodiment, the touch points are shaped like squares, rectangles, triangles, regular and irregular n-edges, circles, stars, elliptical areas, clouds, rings and/or flowers. As the electrically conductive areas coincide with the graphic pattern which is visible for the user of the information carrier, it is preferred that the touch points have versatile shapes that can easily be adapted to different kind of applications and graphic artworks. The shape of the touch points is supposed to be visually attractive.

In one preferred embodiment of the invention, the inactive elements have the same shape as the touch points. Advantageously, the shape of the touch points and inactive elements enhances the optical impression of the user of the information carrier that the code layout and the graphic artwork merge. Thus, the attention of the user is distracted from the function of the electrically conductive elements and the non-visibility of the code layout is improved. It was very surprising that an essentially non-visible code layout can be provided for an information carrier although the code layout is not overprinted with additional color layers and/or layers of opaque white ink. This surprising effect is due to the merging and integration of the code layout into the graphic artwork and the code layout and the graphic artwork coinciding with each other.

In a further preferred embodiment of the invention, the inactive elements have the same shape as the conductive traces of the information carrier according to the present invention. When, for example, the graphic artwork is designed to be a floral pattern, there may be stalks or tendrils present in the graphic artwork which are connected to inactive elements. The inactive elements are in this example designed having the same shape as the stalks or tendrils of the floral pattern corresponding to the conductive traces when speaking in functional terms. It was totally surprising that the inactive elements can also be designed in the shape of and in correspondence to the conductive traces of the information carrier according to the present invention. Tests have shown that inactive elements having the shape and appearance of conductive traces enhance the misleading effect of the inactive elements as a whole and thus contribute to reducing the danger of forgery and abuse of the information carrier according to the present invention.

It is preferred that the touch points have one, preferably two axes of symmetry. Advantageously, symmetric shapes are detected equally on the touch screen, independent of the position and the relative angle of the information carrier on the touch screen. Furthermore, symmetric shapes create a positive, optical impression for the user of an information carrier according to the present application.

Moreover, it is preferred that the first section comprises not more than 10, preferably not more than 5 sub-areas, i.e. the information carrier does not comprise more than 10, preferably not more than 5 touch points. Several small-sized touch screen devices, e.g. smartphones, are not capable of recognizing more than said touches at the same time. For larger devices, e.g. tablets, the detection limit is about 10 or more touches at the same time. It is obvious that these numbers represent the current state of the art in touch point recognition of touch screen bearing devices. However, these numbers work as representatives and may be subject of dynamic developments. Thus, a person skilled in the art will interpret the given numbers to that extent that they represent the number of touches that is technically feasible at all times to come.

In another preferred embodiment of the invention, the sub-areas of the first section have an area of 10 to 115 mm², preferably 25 to 80 mm² and most preferably between 50 and 65 mm². It has been shown that touch points having in particular the last named area size are very well suited to imitate the properties of fingertips. Furthermore, said ranges enable advantageously for a flexible arrangement of touch points on the information carrier.

It is also preferred that the sub-areas of the first section have a diameter of 4 to 12 mm, preferably 6 to 10 mm and most preferably 8 to 9 mm in case of essentially circular sub-areas. As the sub-areas of the first section correspond to the touch points which are used to imitate the properties of fingertips, the touch points advantageously have similar diameters as fingers. It is noted that the fingertips are assumed to have an elliptical shape in the context of this invention. As touch screens and touch screen bearing devices are particularly adapted to recognize fingertips, it is preferred that the touch points imitate both the diameter, size and shape of fingertips.

In another preferred embodiment of the invention, the distance between adjacent sub-areas of the first section is more than 4 mm, preferably more than 6 mm and most preferably more than 8 mm. It has been shown that the detection quality of the touch points can advantageously be improved when the distance of the touch points is more than 4 mm, preferably more than 6 mm and most preferably more than 8 mm. In particular, the last given distance enables for an enhanced dissolution between the touch points. This can be compared to the resolution power of the human eye. When two objects are clearly separated from each other, the human eye will easily be able to recognize both objects as separate objects. The closer these two objects approach each other, the more difficult it is for the human eye to distinguish between the two objects. Accordingly, as touch screens and touch screen bearing devices are adapted to recognize fingertips, it will come easy for the touch screen to make a difference between two touch points, when their distance is more than 4 mm, preferably more than 6 mm and most preferably more than 8 mm. If the distance is smaller, the resolution power of most common touch screens is not sufficient to distinct between two touch points.

It is further preferred that the at least one sub-area of the second section has an area of more than 20 mm², preferably more than 100 mm² and most preferably more than 300 mm². The sub-area of the second section corresponds to the coupling area which is supposed to be touched by a human user in order to set the potential of the coupling area onto the potential of said user. Advantageously, the coupling area is easily accessible. This can be achieved by providing the coupling area with an area that is large enough to be easily touched and reached by a human finger or another part of the body. It has been shown that coupling areas in a range between 20 to 300 mm² combine an optimal accessibility with excellent potential transfer properties. It is preferred that a human user touches the coupling area with one finger, but it can also be preferred that the coupling area is touched with two or more fingers at the same time.

In another preferred embodiment of the invention, the sub-areas of the third section have a width of smaller than 2 mm, preferably smaller than 1 mm and most preferably smaller than 0,75 mm. The sub-areas of the third section correspond to conductive traces. It is their purpose to connect both the touch points to each other and to connect the coupling area to one or more touch points. The conductive traces and the coupling areas are electrically conductive areas, but they are not supposed to be detected by the touch screen or to trigger events on the touch screen. They will, however, contribute to the capacitive signal of the information carrier and cause slight deviations of the detected touch points compared to the physical positions of the touch points. Therefore, it is preferred that the conductive traces cover as little space as possible. Nevertheless, the conductive traces have to be wide enough to ensure the functionality of the conductive traces, i.e. the galvanically or electrically connect the touch points and the coupling area. It was totally surprising that conductive traces can be provided that produce optimal results in conductivity, but cover very little space.

In another preferred embodiment of the invention, the electrically conductive areas and the inactive elements are applied on the front side or the back side of the information by a foil transfer method, preferably a hot stamping method or a thermal transfer on top of digitally printed elements and most preferably with a cold foil transfer method.

In the context of the present invention, a foil transfer process represents a process by the virtue of which a metallic foil layer can be applied at least partially on a non-conductive substrate material. Using the cold foil transfer method, the metallic foil layer is pressed on a substrate which is covered with an adhesive layer at those spots where the metallic foil layer is supposed to be placed. The metallic foil layer sticks to the adhesive spots forming a continuous, fixed connection between the substrate material and the metallic foil layer by means of the adhesive layer. In the process of hot stamping, pressure and heat are used to apply the metallic foil layer according to a pattern on a hot stamping tool to the substrate. Another suitable foil transfer process is a thermal transfer process of metallic foil on top of a digitally printed substrate. All spots on the substrate which are supposed to be formed by the metallic foil are printed by a toner based printing process, e.g. electrophotography or laser printing using powder toner or liquid toner. In a subsequent step, the metallic film is selectively transferred onto the preprinted spots by means of temperature and pressure. The above-mentioned foil transfer methods are preferred, as these technologies are very flexible, easy to adapt to new applications and cost efficient.

Advantageously, not only commonly used silver foil can be used as cold foil but also other shades, e.g. gold or any other color available. The use of different metal foils creates a large variety of visual effects that have so far not been available for information carriers.

It is also preferred that the electrically conductive areas are applied on the front side or the back side of the information carrier by electrically conductive ink. If inactive elements are applied, they can advantageously be produced by using conductive ink as well. In the sense of the present invention, the term "electrically conductive ink" means that electrically conductive areas consists of materials selected from a group comprising metals, metal particles or nanoparticles, electrically conductive particles, in particular carbon black, graphite, graphene, ATO (antimony tin oxide), electrically conductive polymer layer, in particular Pedot:PSS (poly(3,4-ethylenedioxythio-phene) Polystyrene sulfonate), PANI (polyaniline), polyacetylene, polypyrrole, polythiophene and/or pentacene or any combination of these. It has been shown that these materials have excellent electrical properties, enable a cost-efficient application and are easy to process.

In another preferred embodiment of the invention, the electrically conductive areas have a sheet resistance of smaller than 1.000 Ohm/sq, preferably smaller than 500 Ohm/sq, most preferably smaller than 100 Ohm/sq. The sheet resistance of the electrically conductive areas present on the information carrier is reciprocally proportional to the electrical conductivity. As an efficient conductive connection between the touch points and the coupling area is necessary in order to set the touch points on the same potential as the coupling area, a high conductivity for the conductive areas of the information carrier is preferred. This corresponds to a reduced sheet resistance. It was very surprising that an information carrier can be provided with high conductivity as desired even though the conductive areas of the information carrier are overprinted with a varnish or a color layer forming the graphic pattern on top of the conductive elements.

It is also preferred that the inactive elements have an area of smaller than 100 mm², preferably smaller than 40 mm² and most preferably smaller than 20 mm². Especially the latter size for the inactive elements have shown to be small enough not to trigger events on a touch screen bearing device. In particular, it is preferred that the inactive elements are not larger than the touch points. This is preferred as their detection by a touch screen is not desired. Advantageously, the inactive elements of the information carrier will not be detected by the touch screen because of their reduced size compared to the touch points. It was totally surprising that the inactive elements can be integrated into the graphic artwork to make the information carrier according to the present invention visually more attractive and to improve the counterfeit protection of the information. The inactive elements are not galvanically or electrically connected to the coupling area by conductive traces. As these elements are not connected to the coupling area, they do not have the same potential as for example the touch points whose detection is desired. Therefore, the inactive elements do not trigger events on the touch screen. Advantageously, they are distributed to create an impression of a uniform, aesthetically attractive design of the information carrier and help to make the electrically conductive areas less eye-catching.

In another preferred embodiment of the invention, on the side of the information carrier where no conductive layer is applied, an at least partially applied color layer and/or an at least partially applied vanish layer, is applied. By this optional production step, the side of the information carrier which is not furnished with electrically conductive areas, can be provided with varnish layer or color layer for decorative purposes. This enlarges the range of applications for the information carrier according to the present invention. Advantageously, the front side is printed with common CMYK (cyan, magenta, yellow, key) sequences. A layer applied by CMYK printing will also be referred to as color layer in the context of this application. Depending on the specific choice of application method, the manufacture of the information carrier according to the present application can advantageously be realized in one or two machine passes. It is preferred that by a lean production method, the amount of printing material is reduced.

In another aspect of the invention, a method for reading out an information carrier is described where the first section of the electrically conductive sub-areas generates a local change in capacitance on the touch screen when the information carrier and the touch screen are brought in contact with each other. The first section of the electrically conductive sub-areas corresponds to the touch points, whose detection by the touch screen or any touch screen bearing device is desired. When the coupling area of the information carrier is touched by a human user, the potential of the touch points is set onto the potential of said user. It was very surprisingly that touch points can be provided which are detected by a touch screen analogously to a human finger or a fingertip. This is advantageously achieved by designing the touch points on the information carrier so that they cause the same effect on the touch screen as fingertips, i.e. causing a local change in capacitance when the touch screen and the information carrier are brought in contact to each other and the coupling area is touched by a human user.

A touch screen comprises in particular an active circuit. In the sense of the present invention, this circuit is referred to as touch controller. It is connected to a structure of electrodes. These electrodes are usually divided into transmitting and receiving electrodes. The touch controller preferably controls the electrodes in such a way that a signal is transmitted between in each case one or more transmitting electrodes and one or more receiving electrodes. If the touch screen is in a state of rest, this signal is constant. The purpose of a touch screen is in particular the detection of fingers and their position on the surface of the touch screen.

By bringing into contact the finger of a user and the surface of a touch screen, the above-mentioned signal is changed as the touch controller detects a change in capacitance in its vicinity. The signal is usually diminished, because the finger takes up part of the signal from the transmitting electrode and only a reduced signal reaches the receiving electrode. If, instead of a finger, an information carrier comprising electrically conductive touch points is brought into contact to a touch screen, these conductive touch points cause preferably the same effect as one or several fingers, if a coupling area is touched by a user. This desired effect is a change in capacitance which can be detected by the touch controller of the touch screen.

By virtue of the present invention, the touch screen essentially "sees" only those electrically conductive elements which are galvanically or electrically connected to the coupling area by conductive traces. Preferably, these touch points replicate the arrangement or the properties of fingertips. Replicating the arrangement or the properties of a fingertip means, in the sense of the invention, to execute an input to a touch screen just like a finger, i.e. causing a local change in capacitance which can be detected by the touch controller of the touch screen. It is a well-known fact for a person skilled in the art that an input can be executed on a touch screen with one or more fingers.

The properties of a fingertip that are supposed to be imitated by the touch points are the electrical properties, i.e. their conductivity, input pressure, distance from the touch screen as well as geometric properties, i.e. size and shape.

The change of capacitance on the touch screen is caused by bringing into contact the touch screen and the information carrier according to the invention. Preferably, this contact is a static and/or dynamic contact. In the sense of the invention, a static contact is a contact where both the touch screen and the information carrier are in rest. A dynamic contact refers to a contact where at least one of the two devices, i.e. touch screen and information carrier, is in motion.

In a further aspect, the invention relates to an information carrier manufactured according to the method described above.

In another preferred embodiment of the invention, the varnish layer and the color layer are manufactured with additive printing methods selected from a group comprising offset printing, flexo printing, screen printing, gravure printing and/or digital printing. By using the preferred printing technologies, a cost efficient, but highly accurate information carrier can be provided and the production of this information carrier can easily be adapted to different needs according to a large range of applications. The highly flexible use of different printing methods is an advantage of the invention that enables for a large variety of application areas making the information carrier of the present invention a versatile tool in all kind of technology and economic fields.

In another preferred embodiment of the invention, the information carrier can be produced in one single machine pass. Typical printing machine configurations comprise of a cold foil printing unit followed by several standard printing units and a coater. Advantageously, the information carrier including the electrically conductive layer and the color and varnish layers can be printed inline in one machine pass by using such a printing machine. The information carrier can be produced very efficiently and at low processing and material costs.

### Brief description of the drawings:

These and other objects, features and advantages of the present invention will best be appreciated when considered in view of the following detailed description of the accompanying drawings:
- Fig. 1: overview of the method for the manufacture of an information carrier
- Fig. 2: back side of an information carrier comprising the electrically conductive areas: touch points, coupling area and conductive traces
- Fig. 3: back side of an information carrier comprising inactive elements
- Fig. 4: back side of an information carrier comprising both the electrically conductive areas and the electrically inactive elements
- Fig 5: information carrier comprising both the electrically conductive areas and the electrically inactive elements and a graphical artwork
- Fig. 6: example for how to arrange an information carrier on a touch screen
- Fig. 7: exemplary representation of code layout comprising touch points, coupling area and conductive traces

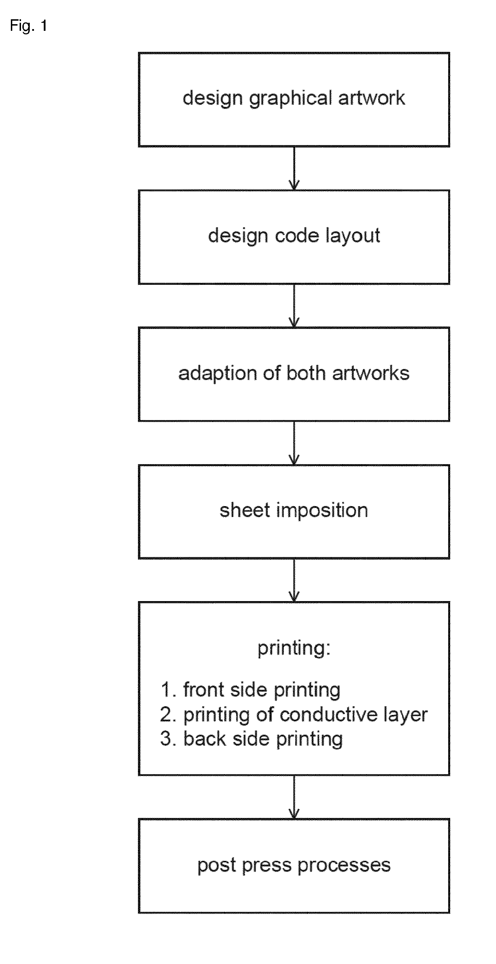

Figure 1 shows an overview of the method for the manufacture of an information carrier (1). In a first step, a graphical artwork (7) is designed. This can be done for both sides (10, 11) of the information carrier (1) or the front side (10) or the back side (11) of the information carrier (1) only. The design of a graphical artwork (7) comprises the creation and the placement of images, selection of fonts, arrangements of various graphical elements.

In a second step, a code layout (12) is designed consisting of electrically conductive areas (3, 4, 5). The electrically conductive areas (3, 4, 5) correspond to touch points (3), conductive traces (5) and a coupling area (4).

The design of the code layout (12) can either be realized by creating a totally new code layout (12) or by adapting a known code layout (12). The code layout (12) should be selected or created in consideration of the graphical artwork (7) with which it coincide on the information carrier (1). It is preferred that the code layout (12) fits to the graphical artwork (7) and to the needs for capacitive detection of the electrically conductive elements by a touchscreen (9). This step represents the actual creation of the electrically conductive areas (3, 4, 5), which will be produced by an electrically conductive material on the non-conductive substrate.

After choosing or creating a code layout (12), both artworks, i. e. the graphical artwork (7) and the code layout (12), are adapted to each other. This means that the graphical artwork (7) is allocated to the electrically conductive areas (3, 4, 5). The aim of the adaption of both the graphical artwork (7) and the code layout (12) is a fine tuning to achieve that both the aesthetical (7) and the code layout (12) design perfectly fit to each other.

The next step of the manufacturing method includes the imposition of several blanks on one print sheet for printing multiple-ups. Sheet imposition is a standard prepress process in the print production workflow.

After the sheet imposition, the printing process starts. In a first printing step, the front side (10) of the information carrier (1) is printed for example with a four color print (CMYK). Also, a varnish can be printed on top of the color layer. After the front side (10) printing of the sheet, the conductive areas (3, 4, 5) are printed on the other side (11) of the non-conductive substrate (2). This can either be done by a cold foil printing process or by using conductive ink. The side of the information carrier where the electrically conductive areas (3, 4, 5) are printed on is referred to the backside (11) of the information carrier (1).

As a further step of the manufacturing method, post press processes can be carried on the print sheet. The print sheets will be separated by cutting or die-cutting. Possible subsequent processes regarding the information carrier are sorting, flow packing, packaging, and/or shipping.

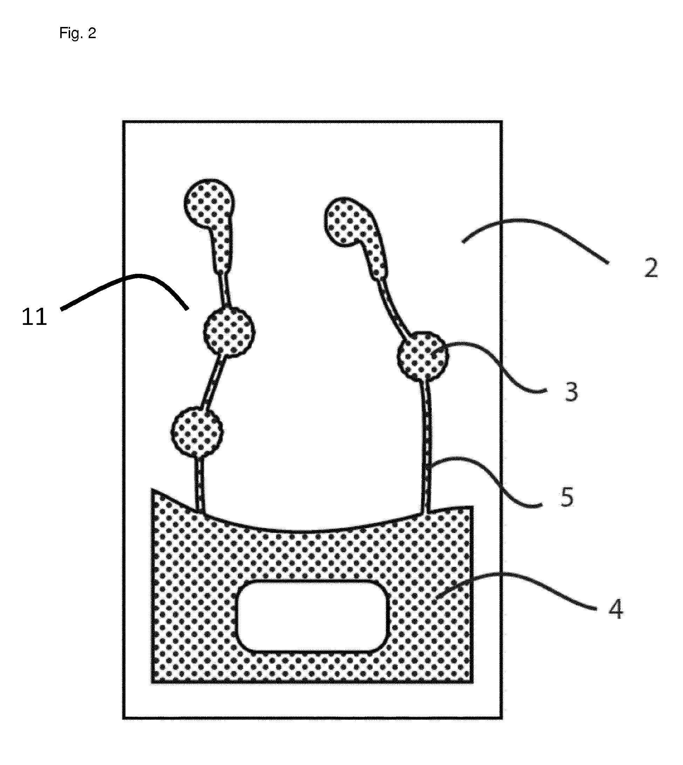

Figure 2 shows the backside (11) of an information carrier (1) which is manufactured by the manufacturing method according to the present invention. Figure 2 shows an electrically non-conductive substrate (2) on which different electrically conductive areas (3, 4, 5) forming the code layout (12) are printed. The more or less circular elements (3) correspond to touch points. Detection of these touch points (3) by a touchscreen (9) is desired. It is their purpose to imitate the properties of fingertips. They are electrically or galvanically connected to each other by electrically conductive traces (5). The conductive traces (5) are narrow, line-like electrically conductive elements which connect the touch points (3) to each other or to a coupling area (4). It can be preferred that all touch points (3) are connected to each other, but it can also be preferred that they form chains so that not all touch points (3) are connected to each other. All touch points (3) are either directly or indirectly electrically connected to the coupling area (4). The purpose of the coupling area (4) is to be touched by a human user so that the coupling area (4) carries the same potential as the human user. By this, the touch screen (9) is enabled to detect the touch points (3), which imitate the properties of fingertips. The detection of the conductive traces (5) and coupling area (4) is not desired. As can be seen from figure 2, it is not necessary that the coupling area (4) forms a solid filled area, the coupling area (4) can also be realized by a grid pattern or can have non-conductive spots or parts. Such a non-conductive spot can be seen in the middle of the coupling area (4) in figure 2.

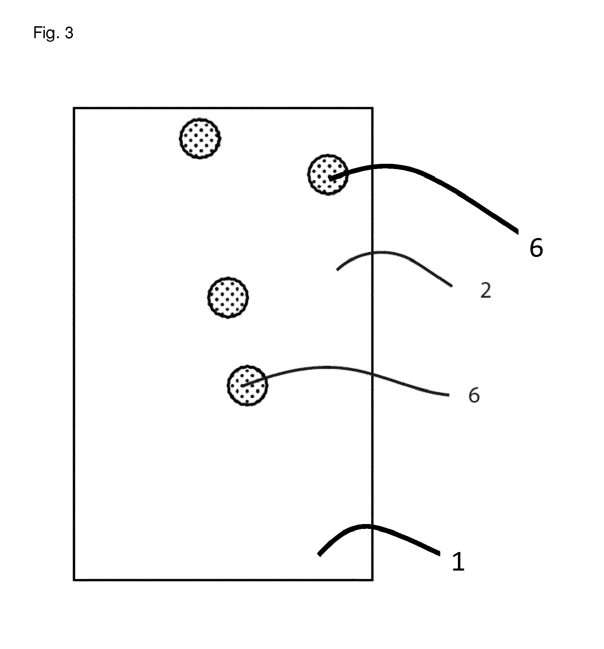

Figure 3 also shows the back side (11) of an information carrier (1) which was manufactured according to the manufacturing method according to the present invention. Figure 3 shows the inactive elements (6). As can be seen from figure 3, these inactive elements (6) are not linked to each other. In particular, they are neither linked to the coupling area (4) nor to other conductive areas (3, 5). Therefore these inactive elements do not have the same potential as touch points (3) and cannot be detected by a touchscreen (9). The purpose of the inactive elements (6) is one the one side to make the whole information carrier (1) visually more attractive. On the other hand they are applied to hide the conductive areas additionally. Integrated into the graphical artwork they serve as a further element to mislead the user from the function of the conductive areas (3, 4, 5). As long as these inactive elements (6) are small enough and not connected to the coupling area (4), they will not be detected by the touchscreen (9).

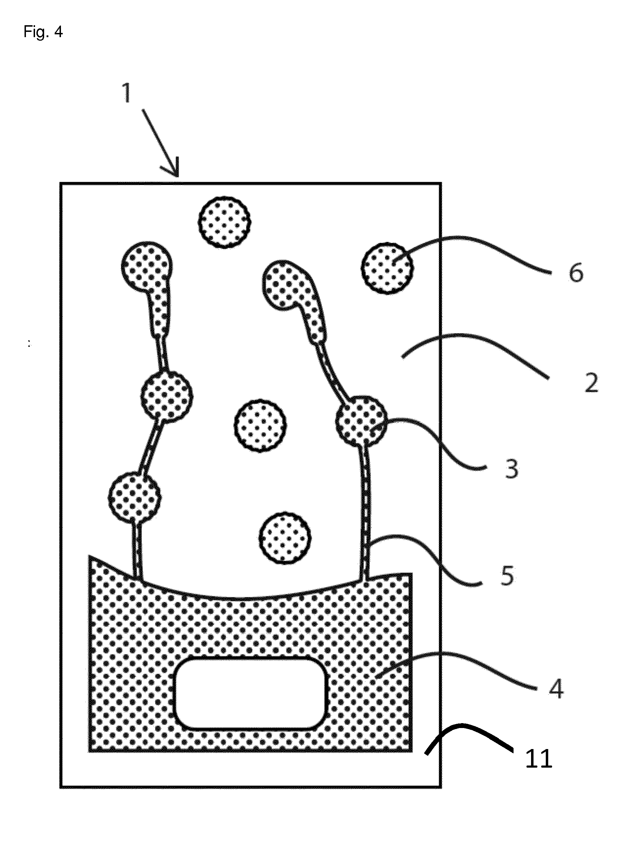

Figure 4 shows the elements that have been shown in figures 2 and 3. It is clearly visible that the inactive electrically conductive elements (6) are not connected to any of the electrically conductive areas (3, 4, 5), such as the touch points (3), the coupling area (4) or the conductive traces (5).

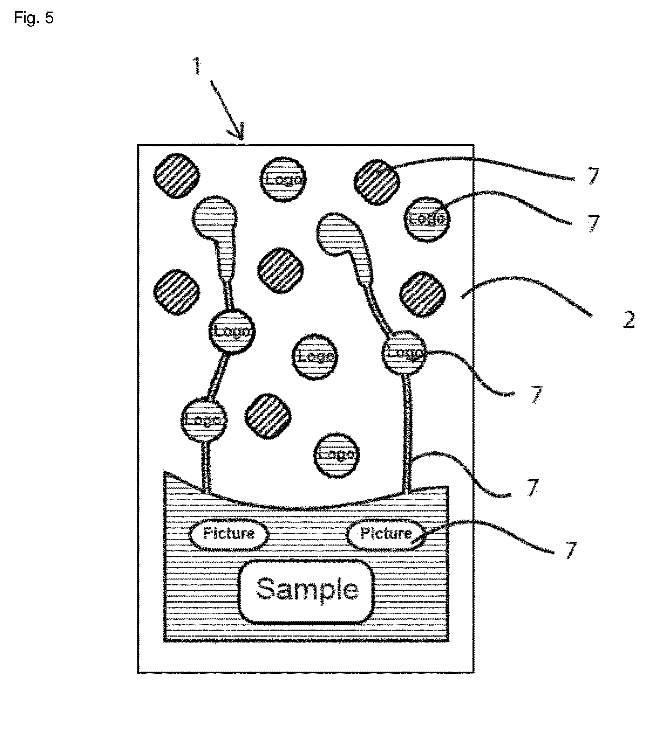

Figure 5 shows an example of an information carrier (1) after the method of manufacture is completed. Again the backside (11) of the information carrier (1) is shown. Figure 5 also shows the graphic artwork (7) and its components.

This graphic artwork (7) is printed on top of the electrically conductive areas (3, 4, 5) and the inactive elements (6). It can be seen, that the graphical artwork (7), the electrically conductive areas (3, 4, 5) and the inactive elements (6) has been arranged in a manner to create a visible attractive product, which will help to make the code less eye-catching. As shown i.e. the touch points (3) have the same size, shape and layout as a part of the graphical artwork called "Logo". This arrangement has been created during the adaption of the graphical artwork (7) and conductive areas (3, 4, 5) to hide the actual code layout (12) later.

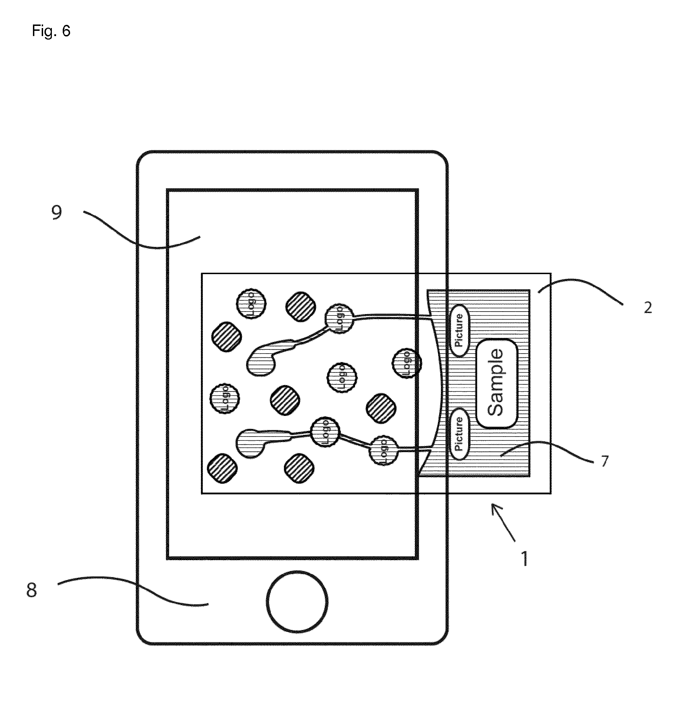

Figure 6 shows a touchscreen bearing device (8) with the touchscreen (9). On top of the touchscreen (9), an information carrier (1) according to present invention is placed. As can be seen from figure 6, it is not necessary to place the whole information carrier (1) on top of the touchscreen (9). In figure 6, the coupling area (4) is not placed on top of the touchscreen (9). The information carrier (1) can be read out both from the front side (10) of the information carrier (1) and from its back side (11).

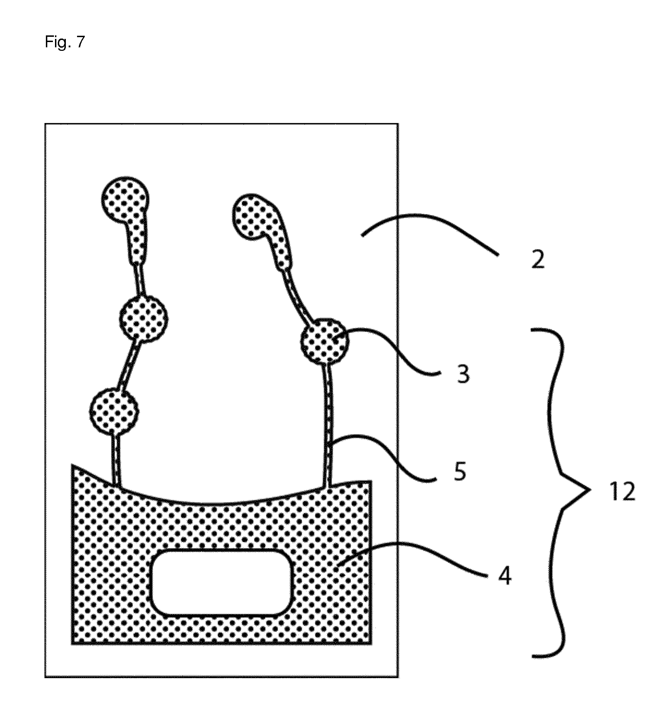

Figure 7 shows an exemplary view of an information carrier (1) according to the present invention comprising a code layout (12) consisting of touch points (3), a coupling area (4) and conductive traces (5).

### List of reference signs:

- 1: Capacitive information carrier
- 2: Electrically non-conductive substrate
- 3: Electrically conductive area (touch points)
- 4: Electrically conductive area (coupling area)
- 5: Electrically conductive area (conductive traces)
- 6: Inactive electrically conductive elements
- 7: Graphic artwork
- 8: device with touch screen
- 9: touch screen
- 10: Front side
- 11: Back side
- 12: Code layout

## Claims

1. Method for manufacture of a planar, capacitive information carrier (1) with a front side (10) and a back side (11) and a graphic artwork (7) on the front side (10) and/or back side (11) of the information carrier (1) comprising electrically conductive areas (3, 4, 5) on either the front side (10) or back side (11) which are connected to each other,
**comprising the following steps**
a) providing an electrically non-conductive substrate (2),
b) application of the electrically conductive areas (3, 4, 5) on the front side (10) or the back side (11) of the information carrier (1) whereby a carrier is created,
c) application of the graphic artwork (7) onto the carrier according to step b), wherein the graphic artwork (7) is formed by at least one at least partially applied color layer and/or at least partially applied varnish layer, wherein the graphic artwork (7) coincides with the electrically conductive areas (3, 4, 5).

2. Method according to claim 1
**comprising the following steps**
a) design of a graphic artwork (7) for the front side (10) and/or the back side (11) of the information carrier (1),
b) design of a code layout (12) for the front side (10) or the back side (11) of the information carrier (1) comprising electrically conductive areas (3, 4, 5),
c) adaption of the graphic artwork (7) to the code layout (12) comprising the electrically conductive areas (3, 4, 5).

3. Method according to claim 1 and/or 2
**characterized in that**
electrically conductive inactive elements (6) are applied on the information carrier (1) and configured to coincide with the graphic artwork (7).

4. Method according to claim 1 or 2
**characterized in that**
the electrically conductive areas (3, 4, 5) comprise sub-areas, forming at least a first (3), second (4) and third (5) section wherein the sub-areas of the third section (5) connect the sub-areas of the first sub-areas (3) and the second sub-area (4) galvanically and/or electrically to each other.

5. Method according to one or more of the preceding claims
**characterized in that**
the first section (3) and the third section (5) of the electrically conductive areas (3, 4, 5) consist of at least one sub-area each, wherein said sub-areas are spatially separated from each other.

6. Method according to one or more of the preceding claims
**characterized in that**
the sub-areas of the first section (3) are shaped like squares, rectangles, triangles, regular and irregular n-edges, circles, stars, elliptical areas, clouds, rings and/or flowers.

7. Method according to one or more of the preceding claims
**characterized in that**
the sub-areas of the first section (3) have one axe of symmetry.

8. Method according to one or more of the preceding claims
**characterized in that**
the sub-areas of the first section (3) have two axes of symmetry.

9. Method according to one or more of the preceding claims
**characterized in that**
the sub-areas of the first section (3) have an area of 10 to 115 mm², preferably 25 to 80 mm² and most preferably between 50 to 65 mm².

10. Method according to one or more of the preceding claims
**characterized in that**
the sub-areas of the first section (3) have a diameter of 4 to 12 mm, preferably 6 to 10 mm and most preferably 8 to 9 mm in case of essentially circular sub-areas.

11. Method according to one or more of the preceding claims
**characterized in that**
the distance between adjacent sub-areas of the first section (3) is more than 4 mm, preferably more than 6 mm and most preferably more than 8 mm.

12. Method according to one or more of the preceding claims
**characterized in that**
the at least one sub-area of the second section (4) has an area of more than 20 mm², preferably more than 100 mm² and most preferably more than 300 mm².

13. Method according to one or more of the preceding claims
**characterized in that**
the sub-areas of the third section (5) have a width of smaller than 2 mm, preferably smaller than 1 mm and most preferably smaller than 0,75 mm.

14. Method according to one or more of the preceding claims
**characterized in that**
the electrically conductive areas (3, 4, 5) and/or the electrically conductive inactive elements (6) are applied on a non-conductive substrate (2) by a foil transfer method, preferably a hot stamping method or a thermal transfer on top of digitally printed elements and most preferably with a cold foil transfer method.

15. Method according to one or more of the preceding claims
**characterized in that**
the electrically conductive areas (3, 4, 5) and/or the electrically conductive inactive elements (6) are applied on a non-conductive substrate (2) by electrically conductive ink.

16. Method according to one or more of the preceding claims
**characterized in that**
the electrically conductive areas (3, 4, 5) have a sheet resistance of smaller than 1.000 Ohm/sq, preferably smaller than 500 Ohm/sq, most preferably smaller than 100 Ohm/sq.

17. Method according to one or more of the preceding claims
**characterized in that**
the electrically conductive inactive elements (6) have an area of smaller than 100 mm², preferably smaller than 40 mm² and most preferably smaller than 20 mm².

18. Method according to one or more of the preceding claims
**characterized in that**
the side of the information carrier (1), which is not printed with the electrically conductive areas (3, 4, 5) and the electrically conductive inactive elements (6) is applied with an at least one, at least partially applied color layer (13) and/or at least partially applied varnish layer (12).

19. Method for reading out an information carrier (1) according to one or more of claims 1 to 18 by a touch screen (9)
**characterized in that**
the first section (3) generates a local change in capacitance on the touch screen (9) when the information carrier (1) and the touch screen (9) are brought in contact with each other.

20. Method according to claim 19
**characterized in that**
the contact may be a static and/or a dynamic contact.

21. Information carrier (1) manufactured according to a method according to claims 1 to 18.
